# EUROPEAN PATENT SPECIFICATION

(11) **EP 0 653 345 B1**
(45) Date of publication and mention of the grant of the patent: **10.06.1998**
(21) Application number: 94203327.5
(22) Date of filing: 14.11.1994
(51) Int. Cl.: B62J 21/00

(54) **Dress guard for a bicycle**
Kleiderschutz für ein Fahrrad
Garde-jupe pour une bicyclette

(30) Priority: 16.11.1993 NL 9301975
(43) Date of publication of application: 17.05.1995
(73) Proprietor: De Woerd B.V., NL-3771 VG Barneveld (NL)
(72) Inventor: Looyen, Willemine Johanna, NL-3771 HE Barneveld (NL); Verbrugge, Jeroen Klaasjan, NL-3151 TB Hoek van Holland (NL)
(74) Representative: Iemenschot, Johannes Andreas, Ir.

(56) References cited:
- DE-C- 850 403
- NL-C- 61 015
- NL-C- 67 671
- US-A- 2 098 510

## Description

The present invention relates to a guard to be fixed against a mudguard of a bicycle or the like and having an at least approximately arcuate edge which is essentially adapted to the radius of curvature of the outside edge of the mudguard and is or can be provided with retaining means which grip around the mudguard edge.

Such a guard is known from, for example, Dutch Patent Application 8802206, which has been laid open for inspection, and which discloses a guard which is bounded by at least two different arcuate edges and has at the edges a hole for allowing through a handbrake or lock fixed to the vertical rear fork. The arcs of the edges correspond to the different arcs of the mudguard edges which are used for bicycles and are appropriate for a particular wheel diameter. This known guard is thus suitable for fixing to mudguards with different radii of curvature.

A drawback of such a design of a guard is that when it is being placed on a bicycle the correct radius of curvature has to be sought, which can certainly be a problem for the unskilled person, and that the means for retaining the dress guard on the mudguard then either have to be disposed on all suitable edges thereof, or subsequently have to be fixed thereto. If there are deviations in the mudguards, for example due to damage or warping, a good fit becomes very difficult. The holes also have to be relatively large at one edge, in order to allow sufficient space for a lock and a handbrake to pass through, with the result that the rigidity of the guard is reduced.

Another aesthetic drawback of such a design is that in the case of bicycles without a lock and/or handbrake the guard fixed on this bicycle therefore has a relatively large unused hole.

The German patent DE-C-850 403, which forms the basis for the preamble of claim 1, discloses a guard comprising two rounded-off triangular guard parts. Each guard part has a curved first side, and a straight second and third side which enclose an angle with a vertex. By moving the guards parts tangentially an variable opening can be formed between them, which opening could be used for a lock. A drawback of this known dress guard is that said variable opening would then extend as a triangle from the mud guard to the rear wheel hub, which impaires the effectiveness of the dress guard.

The object of the invention is to provide a guard which is suitable for fixing in a simple manner to mudguards with different radii of curvature, and which avoids the abovementioned drawbacks.

This object is achieved by the guard according to claim 1.

The invention will be explained in greater detail below with reference to the appended drawings, in which:
Fig. 1 shows a side view of a guard according to the invention on a mudguard with a relatively small radius of curvature;
Fig. 2 shows a side view of a guard according to the invention, fixed on a mudguard with a relatively large radius of curvature;
Fig. 3 shows a front view of a guard in an embodiment with a co-moulded retaining means;
Fig. 4 shows a front view of a guard provided with a different embodiment of a retaining means;
Fig. 5 shows an embodiment of a clamping part for the guard of Fig. 1;
Fig. 6 shows an embodiment of a clamping part for the guard of Fig. 2;
Fig. 7 shows a metal clip for retaining the guard on a mudguard.

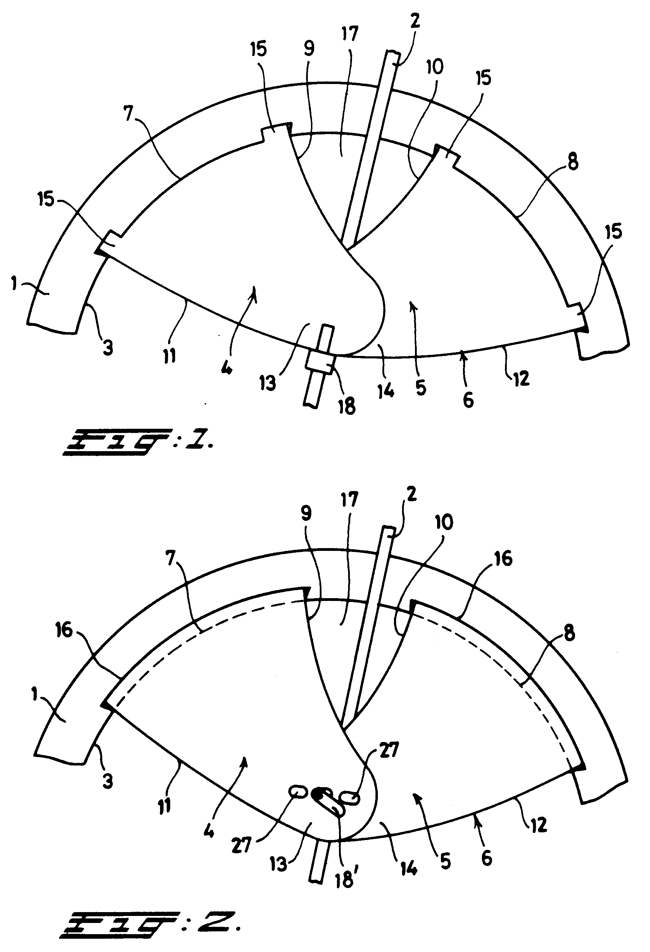

Fig. 1 shows a mudguard 1 which is fixed to a vertical fork 2 of a bicycle (not shown), and to which a guard part 4 and a guard part 5, together forming the guard 6, are fixed, on a mudguard edge 3 of the mudguard 1. Each guard part 4, 5 has a rounded-off triangular shape.

The guard parts 4 and 5 have a first edge 7, 8 respectively which rest near or against the mudguard 1, a second edge 9, 10 respectively and a third edge 11, 12 respectively, which together enclose a rounded-off vertex 13, 14 respectively of the guard part 4, 5 respectively. The first edges 7 and 8 have a radius of curvature which is adapted to the mudguard edge 3, and said first edges are provided with retaining means 15 and 16 which grip around the mudguard edge 3, or have facilities such as, for example, holes to which retaining means can be fixed. The vertices 13 and 14 of the guard parts 4 and 5 are slidable and rotatable relative to each other and relative to the vertical rear fork 2 in such a way that the guard 6 can be adapted sufficiently to the various radii of curvature of the mudguard edges.

Furthermore, through these degrees of freedom of movement, in case of a certain radius of curvature of a mudguard edge 3, the facing second sides 9 and 10 of the two guard parts 4 and 5 near the mudguard edge 3 can form a variable opening 17 for allowing through a lock and/or handbrake (not shown) fixed to the vertical fork 2.

This means that, through rotation and sliding of the vertices 13 and 14 of the two guard parts 4 and 5 relative to each other, the guard according to the invention is suitable for mudguards with different radii of curvature, irrespective of whether these bicycles are provided with a lock and/or handbrake on the vertical fork 2. The second side 9, 10 of each guard part 4, 5 in this case is curved in such a concave manner, or could be provided with a recess, that the opening 17 for a lock and/or a handbrake can be kept as small as possible, so that in this way the splash protection and the aesthetic appearance of a bicycle provided with such a guard are made as good as possible.

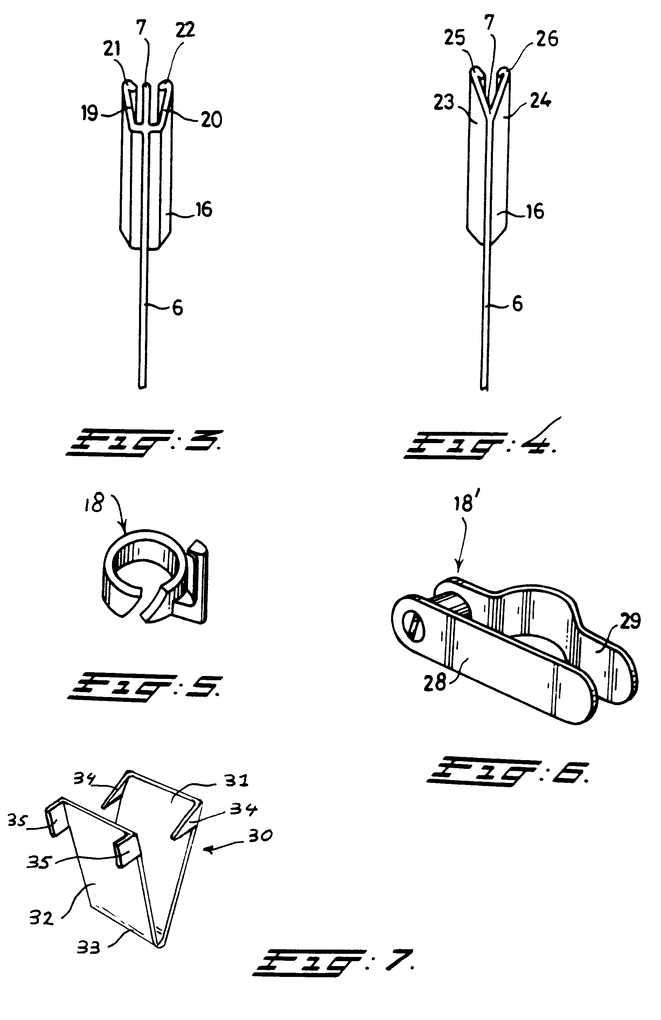

It can be seen in Fig. 1 and Fig. 2 that the two guard parts 4 and 5 are placed against a mudguard edge 3 in such a way that the vertices 13 and 14 of the two guard parts 4 and 5 overlap each other. The vertices 13 and 14 of the two guard parts 4 and 5 of a guard 6 are held together and clamped to the vertical fork 2 by a clamping part 18, 18'.

In a preferred embodiment of a guard according to the invention the two guard parts 4 and 5 are identical, so that they can be fitted in a mirror-inverted manner on the same mudguard edge 3. The advantage of this is that if the guard parts 4 and 5 are made of one, preferably transparent plastic material, the costs of an injection mould for such a guard part are considerably reduced. Mistakes in fitting the guard parts 4 and 5 are also prevented, since the same guard parts can always be used for the various types of bicycle (with or without lock or handbrake) and for mudguards with different radii of curvature.

For retaining a guard part 4, 5 on the generally beaded mudguard edge 3, each guard part 4, 5 is provided with at least one retaining means 15 or one retaining means 16. The retaining means 15 can be fitted, for example, near each end of the first side 7, 8 on the guard part 4, 5, or are preferably moulded onto the guard part 4, 5. In the latter case, instead of two co-moulded retaining means 15, it is also possible to co-mould a retaining means 16 which extends over the full length of the first side 7, 8 of a guard part 4, 5.

Fig. 3 shows an embodiment of a retaining means 16 which consists of two identical mirror-inverted clamping parts 19 and 20 which have been co-moulded near the first side 7, 8 on either side of the guard part 4, 5 and are each provided with a hook part 21, 22 respectively.

Fig. 4 shows on the first side 7, 8 a different embodiment of a retaining means 16, which consists of two identical mirror-inverted clamping parts 23 and 24, each provided with a hook part 25, 26 respectively.

The overlapping vertices 13 and 14 of the guard parts 4 and 5 are held against each other and on the vertical rear fork 2 by means of a clamping part 18. In principle, there are two ways here of clamping the guard parts on the vertical rear fork.

Fig. 5 shows the clamping part 18 of Fig. 1, on a larger scale. In this embodiment the clamping part 18 fixed on the vertical rear fork 2 projects beyond the two third sides 11 and 12 of the overlapping vertices 13 and 14, and the vertices are clamped against each other inside the clamping part 18, or the two guard parts 4 and 5 are pressed against the vertical rear fork 2. The clamping part 18 can also be in the form of a slightly adapted metal wire clamp (not shown) of the type used for clamping already known dress guards to the vertical rear fork.

With the method of clamping of the vertices 13 and 14 according to Fig. 2, the clamping part 18' fixed on the vertical rear fork 2 projects through the two overlapping vertices 13 and 14 and presses the vertices 13 and 14 against itself and/or against the vertical rear fork 2.

For this purpose, in a preferred embodiment of the guard the guard part 4, 5 has at least one, and preferably several, slot-shaped holes 27. These holes are placed in such a way near the vertex 13, 14 of a guard part 4, 5 that when the vertices 13 and 14 of the guard parts 4 and 5 overlap each other, at least some of their holes 27 coincide. The clamping part 18' which presses the two vertices 13 and 14 against each other projects through these coinciding holes.

Fig. 6 shows an exemplary embodiment of the clamping part 18' which is formed by two parts 28 and 29 which are made of plastic, and which can be connected to each other at a first end by a snap connection or by a fastening means such as a self-tapping screw, and which clamping part projects through those of the holes 27, of the two guard parts 4 and 5, which coincide. The parts 28 and 29 of the clamping part 18 at a second end form a clamping means between which both a leg of the vertical rear fork 2 and also the two vertices 13 and 14 of the guard parts 4 and 5 are retained and clamped.

Fig. 7 shows a metal clip 30 which is in particular suitable for fixing a dress guard on a non-beaded mudguard. The clip 30 has two legs 31, 32 and a connecting fold 33. Leg 31 is provided with two gripping teeth 34 and leg 32 is provided with two positioning extensions 35. The clip 30 has preferably such dimensions that it can be placed between the two wall parts of the retaining means shown in fig 3 or 4. In that case the hook part on one of these or both wall parts hold the clip 30. The extensions 35, which can also be gripping teeth, prevent the clip from sliding. When the guard part has to be attached to a non-beaded mudguard the gripping teeth 34 will form a non-sliding connection.

## Claims

1. Guard to be fixed against a mudguard (1) of a bicycle or the like and having an at least approximately arcuate edge which is essentially adapted to the radius of curvature of the outside edge of the mudguard (1) and is or can be provided with retaining means (15, 16) which grip around the mudguard edge, wherein the guard comprises two rounded-off triangular guard parts (4, 5), each with a first side (7, 8) which has a radius of curvature essentially adapted to the mudguard edge (3), and a second side (9, 10) and a third side (11, 12) which enclose an angle with a vertex (13, 14), which guard parts (4, 5) together at or near their vertices (13, 14) can be fixed on the vertical rear fork (2) by means of a clamping part (18, 18') in such a way that, on the one hand, the two second sides (9, 10) of the two guard parts (4, 5) facing each other can form a variable opening (17) for a handbrake or a bicycle lock and that, on the other hand, the retaining means (15, 16) can be brought into engagement with the mudguard edge (3) at or near the first sides (7, 8), **characterized in that** the second side (9, 10) of each guard part (4, 5) near the first side (7, 8) is curved in a concave manner or is provided with a recess in such a way that the variable opening (17) can be formed by the two guard parts (4, 5), while the vertices (13, 14) of the two guard parts (4, 5) overlap each other.

2. Guard according to claim 1, **characterized in that** the guard parts (4, 5) are identical, in such a way that they can be fitted in a mirror-inverted manner on a mudguard edge (3).

3. Guard according to one of claims 1 - 2, **characterized in that** on or near the first side (7, 8) the guard part (4, 5) has one or more hook-shaped retaining means adapted to the mudguard edge (3).

4. Guard according to claims 2 and 3, **characterized in that** one or more retaining means (15, 16) are co-moulded on both sides of the guard part (4, 5).

5. Guard according to claim 3, **characterized in that** the retaining means comprise a metal clip (30) provided with a gripping tooth (34) for gripping the mudguard when placed in the clip, the guard at the first side thereof being adapted to hold the clip.

6. Guard according to one of claims 1 - 5, **characterized in that** in the vertex (13, 14) the guard part (4, 5) has one or more slot-shaped holes (27) placed in such a way that when the vertices (13, 14) of the guard parts (4, 5) overlap each other at least some of the holes (27) coincide.

7. Guard according to one of claims 1 - 6, **characterized in that** the guard parts (4, 5) are made of a preferably transparent plastic material.

8. Guard according to clais 1, **characterized in that** the clamping part (18) can be fixed on the vertical rear fork (2) in such a way that it clamps the overlapping vertices (13, 14) of the guard parts (4, 5) near the third edge (11, 12) thereof.

9. Guard according to claims 1 and 8, **characterized in that** the clamping part (18') consists of two parts (28, 29), which can be connected to each other at a first end and form a clamping means at the other, second end.

10. Guard according to claims 6 and 9, **characterized in that** the clamping part (18') can be fixed on the vertical rear fork in such a way that it projects through one or more partially coinciding holes (27) of the guard parts (4, 5) and clamps both vertices (13, 14) thereof.

## Patentansprüche

1. Schutz, der an einem Schutzblech (1) eines Fahrrads oder Ähnlichem zu befestigen ist und einen wenigstens ungefähr gebogenen Rand aufweist, der im wesentlichen an den Krümmungsradius des Außenrandes des Schutzbleches (1) angepaßt ist, und mit einer Halteeinrichtung (15, 16) versehen ist oder werden kann, die um den Schutzblechrand herum greift, wobei der Schutz zwei abgerundete, dreieckige Schutzteile (4, 5) umfaßt, von denen jeder eine erste Seite (7, 8), die einen Krümmungsradius aufweist, der im wesentlichen an den Schutzblechrand (3) angepaßt ist, und eine zweite Seite (9, 10) und dritte Seite (11, 12) aufweist, die einen Winkel mit einem Scheitel (13, 14) einschließen, wobei die Schutzteile (4, 5) zusammen an oder nahe bei ihren Scheiteln (13, 14) an der vertikalen Hintergabel (2) mittels eines Klemmteils (18, 18') derart befestigt werden können, daß einerseits die zwei zweiten Seiten (9, 10) der Schutzteile (4, 5), die zueinander weisen, eine veränderbare Öffnung (17) für eine Handbremse oder ein Fahrradschloß bilden können, und daß andererseits die Halteeinrichtung (15, 16) in Eingriff mit dem Schutzblechrand (3) bei oder nahe den ersten Seiten (7, 8) gebracht werden kann, **dadurch gekennzeichnet,** daß die zweite Seite (9, 10) von jedem Schutzteil (4, 5) nahe der ersten Seite (7, 8) in einer konkaven Weise gekrümmt oder mit einer Ausnehmung derart versehen ist, daß die veränderbare Öffnung (17) durch die zwei Schutzteile (4, 5) gebildet werden kann, während die Scheitel (13, 14) der zwei Schutzteile (4, 5) einander überlappen.

2. Schutz gemäß Anspruch 1, **dadurch gekennzeichnet,** daß die Schutzteile (4, 5) identisch in einer solchen Weise sind, daß sie auf eine spiegelverkehrten Weise an einem Schutzblechrand (3) befestigt werden können.

3. Schutz gemäß einem der Ansprüche 1-2, **dadurch gekennzeichnet,** daß das Schutzteil bei oder nahe der ersten Seite hakenförmige Halteeinrichtungen aufweist, die an den Schutzblechrand (3) angepaßt sind.

4. Schutz gemäß Anspruch 2 und 3, **dadurch gekennzeichnet,** daß eine oder mehrere Halteeinrichtungen (15, 16) an beiden Seiten des Schutzteils (4, 5) mitgeformt sind.

5. Schutz gemäß Anspruch 3, **dadurch gekennzeichnet,** daß die Halteeinrichtungen eine Metallklammer (30) umfassen, die mit einem Greifzahn (34) zum Ergreifen des Schutzbleches versehen sind, wenn es in der Klammer angeordnet wird, wobei der Schutz auf seiner ersten Seite angepaßt ist, die Klammer zu halten.

6. Schutz gemäß einem der Ansprüche 1-5, **dadurch gekennzeichnet,** daß in dem Scheitel (13, 14) das Schutzteil (4, 5) eine oder mehrere schlitzförmige Löcher (27) aufweist, die derart angeordnet sind, daß, wenn die Scheitel (13, 14) der Schutzteile (4, 5) einander überlappen, wenigstens einige der Löcher (27) zusammenfallen.

7. Schutz gemäß einem der Ansprüche 1-6, **dadurch gekennzeichnet,** daß die Schutzteile (4, 5) aus einem vorzugsweise durchscheinenden Kunststoffmaterial hergestellt sind.

8. Schutz gemäß Anspruch 1, **dadurch gekennzeichnet,** daß das Klemmteil (18) an der vertikalen Hintergabel (2) derart befestigt werden kann, daß es die überlappenden Scheitel (13, 14) der Schutzteile (4, 5) nahe deren dritten Rand (11, 12) einklemmt.

9. Schutz gemäß Anspruch 1 und 8, **dadurch gekennzeichnet,** daß das Klemmteil (18') aus zwei Teilen (28, 29) besteht, die miteinander an einem ersten Ende verbunden werden können und an dem anderen, zweiten Ende eine Klemmeinrichtung bilden.

10. Schutz gemäß Anspruch 6 und 9, **dadurch gekennzeichnet**, daß das Klemmteil (18') an der vertikalen Hintergabel derart befestigt werden kann, daß es durch ein oder mehrere teilweise zusammenfallende Löcher (27) der Schutzteile (4, 5) hervorsteht und deren beide Scheitel (13, 14) einklemmt.

## Revendications

1. Elément de garde à fixer contre un garde-boue (1) d'un bicyclette ou d'un engin analogue et ayant un bord au moins approximativement arqué qui est essentiellement adapté au rayon de courbure du bord externe du garde-boue (1) et est ou peut être équipé de moyens de retenue (15, 16) qui se bloquent autour du bord du garde-boue, l'élément de garde comprenant deux pièces de garde triangulaires arrondies (4, 5), chacune d'entre elles ayant un premier côté (7, 8) qui a un rayon de courbure essentiellement adpaté au bord (3) du garde-boue et un deuxième côté (9, 10) et un troisième côté (11, 12) qui inscrivent un angle avec un sommet (13, 14), lesdites pièces de garde (4, 5), conjointement au niveau de leurs sommets ou au voisinage de ceux-ci, pouvant être fixées sur la fourche arrière verticale (2) au moyen d'une pièce de blocage (18, 18') de telle manière que, d'une part, les deux deuxièmes côtés (9, 10) des deux pièces de garde (4, 5), en regard l'une de l'autre, puissent former une ouverture variable (17) pour un frein à main ou un verrou de bicyclette et que, d'autre part, les moyens de retenue (15, 16) puissent être amenés en contact avec le bord (3) du garde-boue sur les premiers côtés (7, 8) ou au voisinage de ceux-ci, caractérisé en ce que le deuxième côté (9, 10) de chaque pièce de garde (4, 5) proche du premier côté (7, 8) est incurvé de manière concave ou est pourvu d'une cavité de telle manière que l'ouverture variable (17) puisse être formée par les deux pièces de garde (4, 5) tandis que les sommets (13, 14) des deux pièces de garde (4, 5) se chevauchent l'un l'autre.

2. Elément de garde selon la revendication 1, caractérisé en ce que les pièces de garde (4, 5) sont identiques de telle sorte qu'elles puissent être ajustées sur un bord (3) du garde-boue de manière intervertie symétrique.

3. Elément de garde selon l'une quelconque des revendications 1 et 2, caractérisé en ce que, sur le premier côté (7, 8) ou au voisinage de celui-ci, la pièce de garde (4, 5) a un ou plusieurs moyens de retenue en forme de crochet adapté(s) au bord (3) du garde-boue.

4. Elément de garde selon les revendications 2 et 3, caractérisé en ce qu'un ou plusieurs moyens de retenue (15, 16) est ou sont moulés conjointement sur les deux côtés de la pièce de garde (4, 5).

5. Elément de garde selon la revendication 3, caractérisé en ce que les moyens de retenue comprennent une pince métallique (30) pourvue d'une dent de fixation (34) pour se fixer sur le garde-boue lorsqu'il est placé dans la pince, l'élément de garde étant adapté, sur son premier côté, pour maintenir la pince.

6. Elément de garde selon l'une quelconque des revendications 1 à 5, caractérisé en ce que, sur le sommet (13, 14), la pièce de garde (4, 5) présente un ou plusieurs trous (27) en forme de fente placés de telle manière que, lorsque les sommets (13, 14) des pièces de garde (4, 5) se chevauchent l'une l'autre, au moins certains des trous coïncident.

7. Elément de garde selon l'une quelconque des revendications 1 à 6, caractérisé en ce que les pièces de garde (4, 5) sont constituées d'une matière plastique de préférence transparente.

8. Elément de garde selon la revendication 1, caractérisé en ce que la pièce de blocage (18) peut être fixée sur la fourche arrière verticale (2) de telle sorte qu'elle bloque les sommets chevauchants (13, 14) des pièces de garde (4, 5) au voisinage de leur troisième côté (11, 12).

9. Elément de garde selon les revendications 1 et 8, caractérisé en ce que la pièce de blocage (18') est constituée de deux parties (28, 29) qui peuvent être reliées l'une à l'autre à une première extrémité et forment un moyen de fixation à la seconde extrémité.

10. Elément de garde selon les revendications 6 et 9, caractérisé en ce que la pièce de blocage (18') peut être fixée sur la fourche arrière verticale de telle sorte qu'elle fasse saillie à travers un ou plusieurs trous (27) coïncidant partiellement des pièces de garde (4, 5) et bloque leurs deux sommets (13, 14).
